# EUROPEAN PATENT APPLICATION

(11) **EP 3 805 993 A1**
(43) Date of publication of application: **14.04.2021**
(21) Application number: 19202473.5
(22) Date of filing: 10.10.2019
(51) Int. Cl.: G06N 3/04, G06N 3/08

(54) **GENERATION OF GRAPH-STRUCTURED REPRESENTATIONS OF BROWNFIELD SYSTEMS**

(71) Applicant: Siemens Aktiengesellschaft, 80333 München (DE)
(72) Inventor: Brikis, Georgia Olympia, 81739 München (DE); Mogoreanu, Serghei, 81827 München (DE); Ringsquandl, Martin, 83022 Rosenheim (DE)

(57) **Abstract**

The invention specifies a computerized method for generating graph-structured representations of a brownfield system (9), comprising the steps:
- Collecting (M1) training data of training systems, whereby training data consists of training pairs, with each training pair consisting of training sensor observations (3) and a training digital twin model (1),
- transforming (M2) the training digital twin models (1) into training graph-structured representations (2), whereby the training graph-structured representations (2) consist of nodes and links, whereby the nodes represent components of the training system and whereby the links represent relations between the components of the training system,
- training (M3) a graph generative model (3) to generate graph-structured representations of the brownfield system (9) using the training sensor observations (3) and the training graph-structured representations (2) of the training digital twin models (1), and
- generating (MS4) graph-structured representations of the brownfield system (9) using the trained graph generative model (3) and sensor observations of the brownfield system (8).

## Description

### Field of the Invention

The present invention relates to a computerized method for generating graph-structured representations of a brownfield system.

### Background of the Invention

Digital documentation for many products that are in-use today is either not available at all or it is of low quality, e.g. unstructured text, scanned 2-D plans, etc. Having a structured digital documentation (digital twin model) of these brownfield assets/ brownfield systems is very important for monitoring, maintenance, modernization and reproduction. The retrospective re-engineering of digital twin models of brownfield assets is a major problem three reasons:
a) It requires extensive manual effort of domain experts (which is not only expensive, but in some cases such expertise may no longer be available),
b) The asset needs to be dismantled, maybe even destroyed (and therefore is not in-use during that time).
c) The process of acquiring, processing and consolidating existing documentation requires a lot of manual effort and often leads to inconsistencies or reveals missing information.

### Summary of the Invention

The objective of the present invention is to provide an alternative method to generate a digital documentation of brownfield systems.

The invention is given by the features of the independent claims. Advantageous embodiments are provided in the dependent claims. Further features, application possibilities, and advantages of the invention result from the following description.

According to the invention the objective is accomplished by automatic generation of graph-structured representations of brownfield systems from sensor observations of brownfield systems using a machine learning generative model.

The invention claims a computerized method for generating graph-structured representations of a brownfield system, comprising the steps:
- Collecting training data of training systems, whereby training data consists of training pairs, with each training pair consisting of training sensor observations and a training digital twin model,
- transforming the training digital twin models into training graph-structured representations, whereby the training graph-structured representations consist of nodes and links, whereby the nodes represent components of the training system and whereby the links represent relations or interactions between the components of the training system (give context information on how the components relate to each other or interact with each other),
- training a graph generative model to generate graph-structured representations of the brownfield system using the training sensor observations and the training graph-structured representations of the training digital twin models, and
- generating graph-structured representations of the brownfield system using the trained graph generative model and sensor observations of the brownfield system.

3D models and simulation models (e.g. training digital twin models) have implicit structures which can be interpreted as links between components. For 3D models, geometric distance can be abstracted locally by linking components which are "close" in terms of geometric distance (e.g. a room is connected to another one, because they are located next to each other).

For simulation models, physical connections between components are usually explicitly represented by the simulation environment. These connections can be readily regarded as links in a graph (e.g. the flow of the gas path in a gas turbine is explicitly modelled as an equation parameterized by the corresponding compressor state and burner tip temperature, so there's a link between this compressor and the burner tip) .

The graph generative model can be trained following a standard policy gradient procedure in a generative adversarial approach. By maximizing a reward signal from a graph discriminator network, thereby approximating the original distribution of digital twin graphs (digital twin models transferred into training graph-structured representations) in the training data.

This training procedure can be described as follows:
1) Sampled sensor observations from the training data are fed as input to a sensor encoder of the graph generative model (e.g. Long-short-term-memory (LSTMs) can be used to get encodings of multi-variate sensor observations).
2) A graph decoder network takes the encoded sensor observations and maps them to a graph structure (e.g. Graph Convolutional Policy Network (GCPN) can be used for this). A Graph Discriminator network estimates how close the generated graph is to the original example from the training data. This estimation is used as reward for the graph generative model.
3) Once the GCPN pulls a stop action (or after a maximum number of steps), a corresponding final generated graph is fed into a queue of "fake" generated examples.
4) The "fake" example queue is used to train a graph discriminator network in parallel to the graph generative model - therefore being an example of a generative adversarial network (GAN) training.

Sensor observations or operational data of the brownfield system/ asset typically exists from either direct or indirect sensor monitoring. The method according to the invention proposes a generative machine learning model that relies on pairs of sensor observations/ operational data and graph-structured digital twins (digital twin models transformed into training graph-structured representations) for training. Such pairs of training data are available for newer assets that already come with a digital twin and sensor observations. The generative machine learning model outputs graphs conditioned on the sensor observations as input. After training, the generative machine learning model can then be applied to brownfield systems/ assets for which only sensor observations or operational data is available.

The digital twin models are transformed into training graph-structured representations, because graphs are universal data structures that are best suited to represent entities in relation with rich context information. The choice of graphs as the underlying data representation model for the generated digital twins is motivated not only the fact that graphs are the most natural way to represent complex (i.e. consisting of a multitude of components) systems, but also their flexibility: depending on the available amount of training data, graphs can represent the asset on an abstract or highly detailed level.

According to a further embodiment the graph generative model is designed as a generative deep neural network model or an encoder-decoder deep neural network. An encoder-decoder deep neural network means that the graph generative model is following an encoder-decoder (autoencoder) framework of "deep" neural network architectures (e.g. Graph Variational AutoEncoder, Graph Convolutional Policy Network).

According to a further embodiment the training digital twin models and the brownfield system is a building, a production asset or a plant.

According to a further embodiment the training sensor observations and the sensor observations of the brownfield system is/ are operational data, power consumption data, Wi-Fi-signals, temperature measurements, CO2/NOX levels, and / or control system alarms and events.

According to a further embodiment the operational data is observed by vibration sensors, temperature sensors, and/ or microphones.

According to a further embodiment the generated graph-structured representations of the brownfield system include structural and/ or topographical information of the brownfield system.

According to a further embodiment the graph-structured representations of the brownfield system are used for monitoring, maintenance, modernization and/ or reproduction of the brownfield system.

The three use cases described in the following can greatly benefit from the invention. Firstly, brownfield buildings: Wi-Fi-signals (frequency of Wi-Fi signal can be measured and reflect locations and movements of persons) in buildings (brownfield sensor observations) indirectly monitor building topology, e.g. room layout, pathways, doors, etc. from which a digital building twin can be derived with the purposed method.

Some newer buildings come with graph-structured building information models (training digital twin models/ training graph-structured representations, e.g. BIM IFC, Autodesk Revit) and store sensor data/ sensor observations such as Wi-Fi-signals (training sensor observations). These pairs can be used as the training data for learning how to generate digital twins of (older) brownfield buildings (graph-structured representations of a brownfield system).

Secondly, brownfield production equipment: Brownfield production assets (e.g. motors) are monitored by attaching a variety of sensors (e.g. vibration sensors, temperature sensors, microphones) to the outer shell of the machine (brownfield sensor observations). The readings of these sensors are used for monitoring the asset's health, scheduling its maintenance, as well as estimating crucial metrics such as the remaining lifespan. Some of these tasks also rely on the availability of the corresponding simulation model that reflects the behaviour of the asset under certain operational and environmental conditions. Creating such a model is impossible without a digital twin reflecting the asset's structure - which is why some of the monitoring tasks cannot be performed on older brownfield assets for which such data is not available.

More recent models of machines come with dedicated 3D models (training digital twin model) which can also be represented as a graph (training graph-structured representations) and similar sensor observations (training sensor observations), which again can be exploited as pairs of training data.

Thirdly, Brownfield plants: The power consumption of plants (e.g. switchgear plants, process industry plants) is monitored and assessed using sensors (brownfield sensor observations) placed at different devices and transmission lines within the plant. The measurements taken can be used to meet power consumption requirements but are also a valuable indicator of device/plant health. However, not every device in a plant can be/is equipped with a separate sensor. Thus, some sensors measure the power consumed by several devices e.g. connected in series. To identify and properly assess such sensor measurements knowledge of the plant topology is necessary. In Brownfield plants information on the plant's topological setup does often not exist or is not up to date.

Newly designed plants come with topological plans (training digital twin model) while being equipped with sensors for power usage measuring (training sensor observations). The topological information of these plants (training digital twin model) can be transformed into graph representations (training graph-structured representations) and together with the sensory information (training sensor observations) exploited for training a model. The learned model would then allow the extraction of a plant's topology from power consumption sensor measurements (generating graph-structured representations of a brownfield system), e.g. in the case of Brownfield plants without pre-existing topological plants.

The advantages of the purposed method are:
a) A trained generative model allows to re-construct structured representation of brownfield assets automatically, requiring little to no manual effort (cost and time reduction). Re-constructed digital twins enable to reproduce, more efficiently maintain and monitor brownfield assets that are not well-documented.
b) Choice of generating graph structures rather than 3D models gives the method more flexibility in the representation that can be of different levels of detail depending on the amount of training data available.
c) Employing a generation model ends up with a representation for brownfield asset that has the same makeup as the representations used for training, allowing for comparability and application of potentially already existing analytical models, visualization, etc.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: shows a flow diagram of the computerized method for generating graph-structured representations of a brownfield system,
- Fig. 2: shows a flow diagram of generating graphstructured representations of a brownfield building,
- Fig. 3: shows collected sensor observations (Wi-Fi signals) of a brownfield building,
- Fig. 4: shows a generated graph-structured representation of a brownfield building using a trained graph generative model and sensor observations of the brownfield building, and
- Fig. 5: shows a flow diagram of the general procedure of training a graph generative model.

### Detailed Description of the Invention

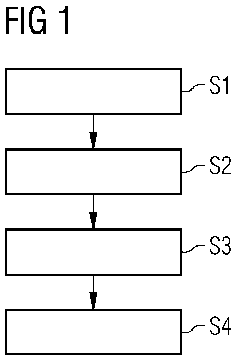

Fig. 1 shows a flow diagram of the computerized method for generating graph-structured representations of a brownfield system. The Computerized method comprises the steps:
- Step 1 M1: Collecting training data of training systems, whereby training data consists of training pairs, with each training pair consisting of training sensor observations and a training digital twin model,
- Step 2 M2: Transforming the training digital twin models into training graph-structured representations, whereby the training graph-structured representations consist of nodes and links, whereby the nodes represent components of the training system and whereby the links represent relations between the components of the training system,
- Step 3 M3: Training a graph generative model to generate graph-structured representations of the brownfield system using the training sensor observations and the training graph-structured representations of the training digital twin models, and
- Step 4 M4: Generating graph-structured representations of the brownfield system using the trained graph generative model and sensor observations of the brownfield system.

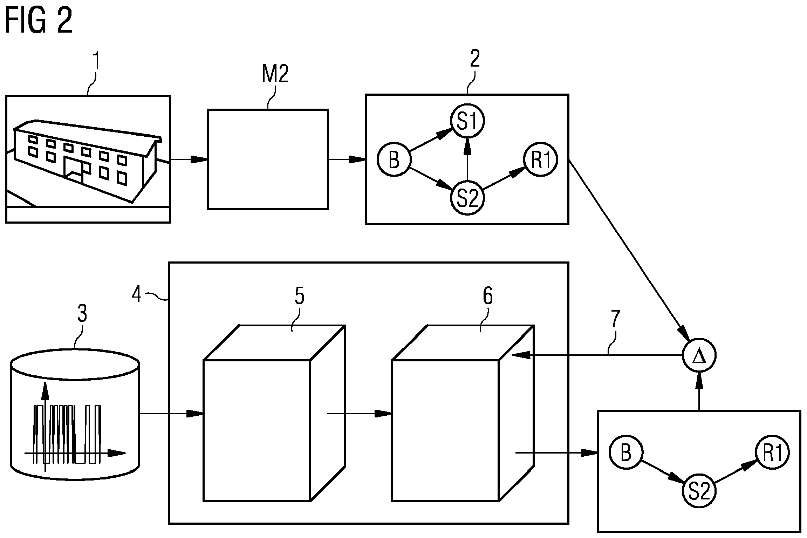

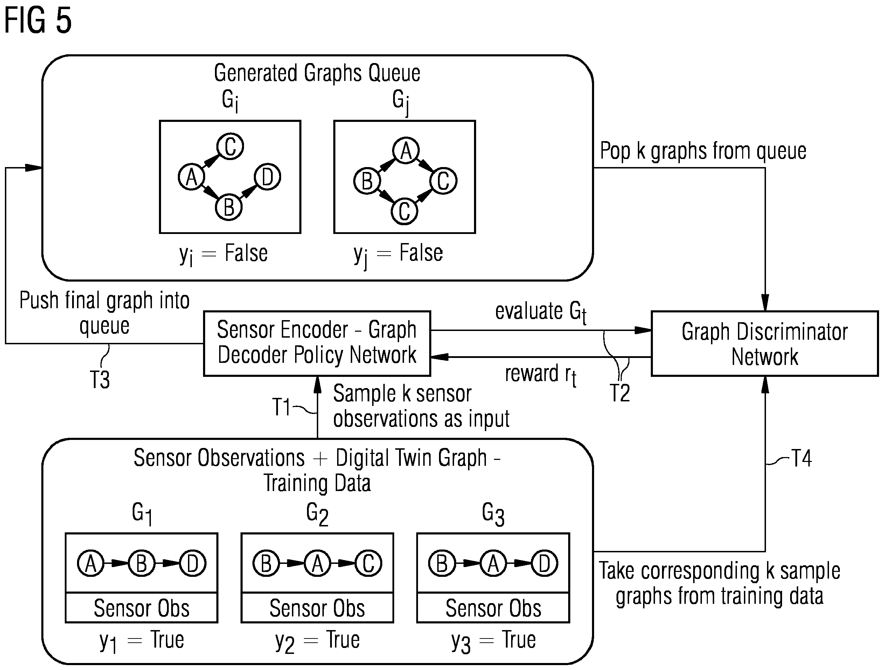

Fig. 2 shows a flow diagram of generating graph-structured representations of a brownfield building: Training digital twin models 1 are transformed (during Step 2 M2) into training graph-structured representations 2. Training data pairs, each of a training graph-structured representation 2 and training sensor observations 3 are fed into a graph generative model 4. The graph generative model 4 can be designed as an encoder-decoder deep neural network with a sensor encoder network 5 and a graph decoder network 6. The graph generative model 4 can follow the encoder-decoder framework to sample graph-structured representation of a brownfield building conditioned on sensor observations of the brownfield building. During training of the graph generative model 4 an error feedback 7 is given on how close the graph-structured representation of the brownfield building is to the original example of the training graph-structured representations 2 from the training data. The training procedure is descried in more detail in Fig. 5.

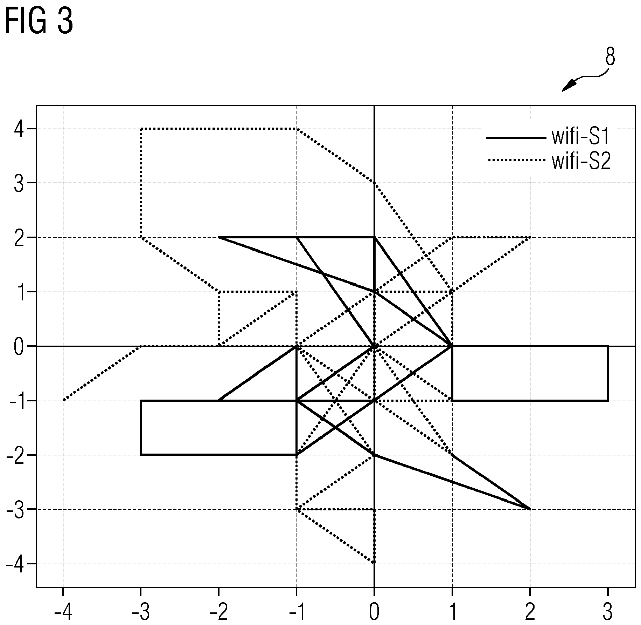

Fig. 3 shows collected sensor observations of a brownfield building 8: Wi-Fi-signals from mobile phone clients reveal (x, y)-coordinates from which building topology can be derived. In this case, we visualize two Wi-Fi networks for story S1 and story S2.

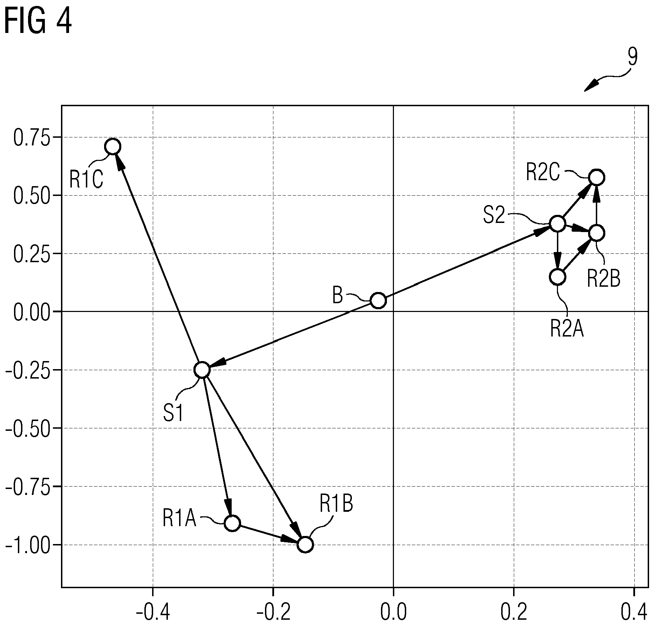

Fig. 4 shows a generated graph-structured representation of a brownfield building 9 (example building topology as graph) using a trained graph generative model and sensor observations of the brownfield building: One building (represented as a node B), two stories (nodes S1 and S2), each with three rooms (R1A, RIB, R1C belonging to S1; R2A, R2B, R2C belonging to S2), and pathways that connect rooms (edges between the corresponding nodes).

Fig. 5 shows a flow diagram of the general procedure of training a graph generative model. The graph generative model can be trained following a standard policy gradient procedure in a generative adversarial approach. By maximizing a reward signal from a graph discriminator network, thereby approximating the original distribution of digital twin graphs (digital twin models transferred into training graph-structured representations) in the training data.

This training procedure can be described as follows: Training step 1 T1: Sampled sensor observations from the training data are fed as input to a sensor encoder of the graph generative model (e.g. Long-short-term-memory (LSTMs) can be used to get encodings of multi-variate sensor observations) .

Training step 2 T2: A graph decoder network takes the encoded sensor observations and maps them to a graph structure (e.g. Graph Convolutional Policy Network (GCPN) can be used for this). A Graph Discriminator network estimates how close the generated graph is to the original example from the training data. This estimation is used as reward for the graph generative model.

Training step 3 T3: Once the GCPN pulls a stop action (or after a maximum number of steps), a corresponding final generated graph is fed into a queue of "fake" generated examples. Training step 4 T4: The "fake" example queue is used to train a graph discriminator network in parallel to the graph generative model - therefore being an example of a generative adversarial network (GAN) training.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

1 Training digital twin model
2 Training graph-structured representations
3 Training sensor observations
4 Graph generative model
5 Sensor encoder network
6 Graph decoder network
7 Error feedback
8 sensor observations of the brownfield system
9 graph-structured representations of the brownfield system
M1 Step 1
M2 Step 2
M3 Step 3
M4 Step 4
T1 Training step 1
T2 Training step 2
T3 Training step 3
T4 Training step 4

## Claims

1. Computerized method for generating graph-structured representations of a brownfield system (9), comprising the steps:
- Collecting (M1) training data of training systems, whereby training data consists of training pairs, with each training pair consisting of training sensor observations (3) and a training digital twin model (1),
- transforming (M2) the training digital twin models (1) into training graph-structured representations (2), whereby the training graph-structured representations (2) consist of nodes and links, whereby the nodes represent components of the training system and whereby the links represent relations between the components of the training system,
- training (M3) a graph generative model (3) to generate graph-structured representations of the brownfield system (9) using the training sensor observations (3) and the training graph-structured representations (2) of the training digital twin models (1), and
- generating (MS4) graph-structured representations of the brownfield system (9) using the trained graph generative model (3) and sensor observations of the brownfield system (8).

2. Method according to claim 1,
**whereby** the graph generative model (3) is designed as a generative deep neural network model or an encoder-decoder deep neural network.

3. Method according to one of the previous claims,
**whereby** the training digital twin models (1) and the brownfield system is a building, a production asset or a plant.

4. Method according to one of the previous claims,
**whereby the** training sensor observations (3) and the sensor observations of the brownfield system (8) is/ are operational data, power consumption data, Wi-Fi-signals, temperature measurements, CO2/NOX levels, and / or control system alarms and events.

5. Method according to claim 4,
**whereby** the operational data is observed by vibration sensors, temperature sensors, and/ or microphones.

6. Method according to one of the previous claims,
**whereby** the generated graph-structured representations of the brownfield system (9) include structural and/ or topographical information of the brownfield system.

7. Method according to one of the previous claims,
**whereby** the graph-structured representations of the brownfield system (9) are used for monitoring, maintenance, modernization and/ or reproduction of the brownfield system.
